# EUROPEAN PATENT SPECIFICATION

(11) **EP 2 819 375 B1**
(45) Date of publication and mention of the grant of the patent: **13.07.2016**
(21) Application number: 12869317.3
(22) Date of filing: 23.03.2012
(51) Int. Cl.: H04L 29/08, G06F 13/00, H04W 8/00, H04L 29/06

(54) **METHOD AND DEVICE FOR DATA ACCESS**
VERFAHREN UND VORRICHTUNG FÜR DATENZUGRIFF
PROCÉDÉ ET DISPOSITIF POUR OBTENIR UN ACCÈS À DES DONNÉES

(30) Priority: 22.02.2012 CN 201210040957
(43) Date of publication of application: 31.12.2014
(73) Proprietor: ZTE Corporation, Shenzhen, Guangdong 518057 (CN)
(72) Inventor: LI, Fei, Shenzhen Guangdong 518057 (CN); LIANG, Guohe, Shenzhen Guangdong 518057 (CN)
(74) Representative: Carpintero Lopez, Francisco
(86) International application number: PCT/CN2012/072894
(87) International publication number: WO 2013/123688

(56) References cited:
- WO-A1-2010/145122
- CN-A- 101 010 927
- CN-A- 101 594 614
- CN-A- 101 883 142
- "Smartcard Web Server Architecture ; OMA-SCT-2005-0057-AD_Smartcard-Web-Server" , OMA-SCT-2005-0057-AD_SMARTCARD-WEB-SERVER, OPEN MOBILE ALLIANCE (OMA), 4330 LA JOLLA VILLAGE DR., SUITE 110 SAN DIEGO, CA 92122 ; USA , no. .2 3 June 2005 (2005-06-03), pages 1-24, XP064021867, Retrieved from the Internet: URL:ftp/Public_documents/ARCH/ARC-SEC_SCT/ 2005/ [retrieved on 2005-06-10]
- "Smartcard-Web-Server ; OMA-TS-Smartcard_Web_Server-V1_2-20110801- D", OMA-TS-SMARTCARD_WEB_SERVER-V1_2-20110801- D, OPEN MOBILE ALLIANCE (OMA), 4330 LA JOLLA VILLAGE DR., SUITE 110 SAN DIEGO, CA 92122 ; USA , no. 1.2 1 August 2011 (2011-08-01), pages 1-104, XP064022617, Retrieved from the Internet: URL:ftp/Public_documents/ARCH/ARC-SEC_SCT/ Permanent_documents/ [retrieved on 2011-08-01]

## Description

### Field

The present invention relates to the field of communications, in particular to a method and device for accessing data.

### Background

According to the requirements of the Global System for Mobile Communications Alliance (GSMA) on the eNFC mobile phone which supports the convergence of mobile phone and smart card, the mobile phone needs to realize the function of a Smart Card Web Server (SCWS). Namely, a web server is embedded into a Subscriber Identity Module (SIM) card. The application of a terminal may access the resources and service on the SIM card through the HyperText Transfer Protocol (HTTP). A web browser may be used as the user interface of the application because the data is exchanged through the HTTP. According to the SCWS standard of the Open Mobile Alliance (OMA) of International Standardization Organization (ISO), the WWW web access address and Transmission Control Protocol (TCP) port that the SIM card provides for the mobile phone are 127.0.0.1 and 3516 respectively, thereby, a mobile phone user may access the SCWS only by inputting http:" 127.0.0.1:3516.

Along with the increasing share of the smart phone in the market, its architecture generally includes one Application Processor (AP) and one or more Communication Processors (CPs), wherein the AP is mainly responsible for processing the application on the mobile phone and further includes a browser, a TCP/IP stack, a WIFI, a Bluetooth and the like; and the CP is responsible for related events of an air interface of a communication network and includes a radio frequency signal processor, a communication protocol stack, a Universal Integrated Circuit Card (UICC) interface of the ISO-7816 standard and the like.

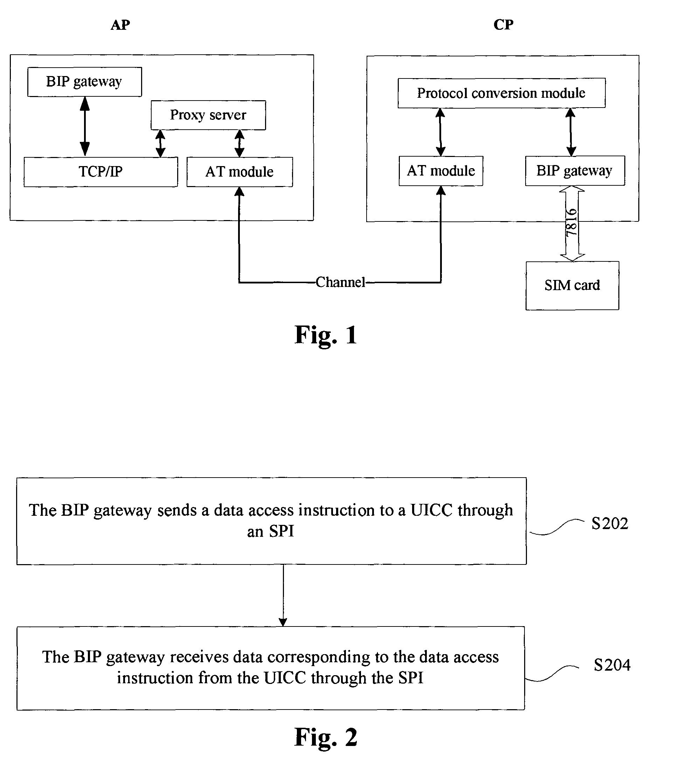

Fig. 1 is a block diagram showing the structure of a system for accessing data according to the related arts. As shown in Fig. 1, the UICC is connected with the CP through port 7816. A proxy server listens for the connection request of a port of the TCP. When a browser user inputs http://127.0.0.1 port on a browser, the proxy server is connected with the browser and forwards http data packets through an AT module and the CP. After receiving the HTTP data from the AT module, a protocol conversion module identifies a request for the SIM card and forwards the request which has been converted into one supported by the Bearer Independent Protocol (BIP) to the SIM card through port 7816. Thereby, the web server of the SIM card is accessed and the response data of the server is sent along this channel to a browser to be displayed.

However, in this mode, the user accesses the web server on the SIM card through the browser, and data must be transmitted through the channel between two processors and port 7816 between the CP and the SIM card. The speed of the two channels limits the transmission speed of data. Meanwhile, an AT command is always transmitted slowly and the transmission speed of port 7816 is generally 23kbps, so that the display is slow when a user browses a web on the UICC.

WO2010/145122A1 discloses a data transmission method and terminal.

### Summary

The present invention provides a method and device for accessing data, in order to at least solve the problem that data is transmitted slowly through the channel between an AP and a CP and port 7816 in the related arts.

According to one aspect of the present invention, a method for accessing data is provided.

The method for accessing data is applied to an AP, which includes: a BIP gateway. The method includes: the BIP gateway sends a data access instruction to a UICC through a Serial Peripheral Interface (SPI); and the BIP gateway receives the data corresponding to the data access instruction from the UICC through the SPI.

Preferably, before the BIP gateway sends the data access instruction to the UICC through the SPI, the method further includes: the BIP gateway receives a connection establishment request message from a network browser; and the BIP gateway establishes a channel between itself and the UICC.

Preferably, the step that the BIP gateway establishes the channel between itself and the UICC includes: the BIP gateway performs protocol conversion on the connection establishment request message and then sends it to the UICC; the BIP gateway receives a channel establishment request message from the UICC; and the BIP gateway sends a channel establishment success message to the UICC.

Preferably, the step that the BIP gateway sends the data access instruction to the UICC through the SPI includes: the BIP gateway receives a data access instruction from a network browser; the BIP gateway sends a notification message to the UICC through the SPI; the BIP gateway receives a response message for the receiving request of the data access instruction from the UICC through the SPI; and the BIP gateway performs protocol conversion on the data access instruction and then sends it to the UICC through the SPI.

Preferably, the step that the BIP gateway receives the data corresponding to the data access instruction from the UICC through the SPI includes: the BIP gateway receives the data corresponding to the data access instruction from the UICC through the SPI; and the BIP sends a notification message that the data corresponding to the data access instruction has been received to the UICC through the SPI and sends the data corresponding to the data access instruction to the network browser.

Preferably, after the BIP gateway receives the data corresponding to the data access instruction from the UICC through the SPI, the method further includes: the BIP gateway receives a channel closing request message from the UICC through the SPI; the BIP gateway closes the channel; and the BIP gateway sends a channel closing acknowledgement message to the UICC through the SPI and sends a channel closing notification message to the network browser.

According to another aspect of the present invention, a device for accessing data is provided.

The device for accessing data includes: a BIP gateway, including: a first receiving unit, configured to receive a data access instruction from a network browser, a first sending unit, configured to send the data access instruction to the UICC through an SPI, a second receiving unit, configured to receive the data corresponding to the data access instruction from the UICC through the SPI, and a second sending unit, configured to send the data corresponding to the data access instruction to the network browser.

Preferably, the BIP gateway further includes: a third receiving unit, configured to receive a connection establishment request message from the network browser, and an establishment unit, configured to establish a channel between the BIP gateway and the UICC.

Preferably, the establishment unit includes: a conversion unit, configured to perform protocol conversion on the connection establishment request message and then send it to the UICC through the SPI, a fourth receiving unit, configured to receive a channel establishment request message from the UICC through the SPI, and a third sending unit, configured to send a channel establishment success message to the UICC through the SPI.

Preferably, the BIP gateway further includes: a fifth receiving unit, configured to receive a channel closing request message from the UICC through the SPI, a closing unit, configured to close the channel, and a fourth sending unit, configured to send a channel closing acknowledgment message to the UICC through the SPI and send a channel closing notification message to the network browser.

Through the present invention, the BIP gateway in the CP is re-configured in the AP, and the network browser accesses the data on the UICC by the BIP gateway through the SPI, so that the problem that data is transmitted slowly through the channel between the AP and CP and port 7816 in the related arts is solved. Consequently, access speed is improved for the user and large data transmission is implemented for the web server in the UICC.

### Brief Description of the Drawings

The drawings illustrated here are to provide further understanding of the present invention and constitute one part of the application, and the exemplary embodiments of the present invention and the explanations thereof are intended to explain the present invention, instead of improperly limiting the present invention. In the drawings:
Fig. 1 is a block diagram showing the structure of a system for accessing data according to the related arts;
Fig. 2 is a flowchart of a method for accessing data according to an embodiment of the present invention;
Fig. 3 is a flowchart of a method for accessing data according to a preferred embodiment of the present invention;
Fig. 4 is a block diagram showing the structure of a device for accessing data according to an embodiment of the present invention;
Fig. 5 is a block diagram showing the structure of a device for accessing data according to a preferred embodiment of the present invention; and
Fig. 6 is a block diagram showing the structure of a system for accessing data according to an embodiment of the present invention.

### Detailed Description of the Embodiments

The present invention will be described below with reference to the drawings and embodiments in detail. It should be noted that, in the case of no conflict, the embodiments of the application and features therein may be combined with each other.

Fig. 2 is a flowchart of a method for accessing data according to an embodiment of the present invention. As shown in Fig.2, the method is applied to an AP. The AP includes a network browser and a BIP gateway. The method mainly includes the following steps.

Step 202: The BIP gateway sends a data access instruction to a UICC through an SPI.

Step 204: The BIP gateway receives data corresponding to the data access instruction from the UICC through the SPI.

In the related arts, data is transmitted slowly through the channel between the AP and the CP and port 7816. By the method shown in Fig. 2, the BIP gateway is configured in the AP and the network browser accesses the data on the UICC by the BIP gateway through the SPI, so that the problem that data is transmitted slowly through the channel between the AP and CP and port 7816 in the related arts is solved. Consequently, access speed is improved for the user and large data transmission is implemented for the web server in the UICC.

Preferably, before the BIP gateway sends the data access instruction to the UICC through the SPI, the method further includes:
(1) the BIP gateway receives a connection establishment request message from the network browser; and
(2) the BIP gateway establishes a channel between itself and the UICC.

In a preferred implementation process, the step that the BIP gateway establishes the channel between itself and the UICC may further include:
(1) the BIP gateway performs protocol conversion on the connection establishment request message and then sends the connection establishment request message subjected to the protocol conversion to the UICC;
(2) the BIP gateway receives a channel establishment request message from the UICC; and
(3) the BIP gateway sends a channel establishment success message to the UICC.

Of course, besides the channel establishment way, the BIP gateway may establish the channel between itself and the UICC in other ways.

Preferably, the interface corresponding to the channel may be but not limited to one of the following: SPI and ISO-7816 standard interface.

Namely, data may be actually transmitted through both the SPI and the ISO-7816 standard interface. Of course, data may also be transmitted through other interfaces. It should be noted that data is transmitted in a high speed through the SPI so that the SPI is suitable for large data transmission.

Preferably, the step that the BIP gateway sends the data access instruction to the UICC through the SPI includes:
(1) the BIP gateway receives the data access instruction from the network browser;
(2) the BIP gateway sends a notification message to the UICC through the SPI;
(3) the BIP gateway receives a response message requesting to receive the data access instruction, wherein the response message is from the UICC through the SPI; and
(4) the BIP gateway performs protocol conversion on the data access instruction and then sends the data access instruction subjected to the protocol conversion to the UICC through the SPI.

Preferably, the step that the BIP gateway receives the data corresponding to the data access instruction from the UICC through the SPI includes:
(1) the BIP gateway receives the data corresponding to the data access instruction from the UICC through the SPI; and
(2) the BIP gateway sends a notification message that the data corresponding to the data access instruction has been received to the UICC through the SPI and sends the data corresponding to the data access instruction to a network browser.

Preferably, after the BIP gateway receives the data corresponding to the data access instruction from the UICC through the SPI, the method further includes:
(1) the BIP gateway receives a channel closing request message from the UICC through the SPI;
(2) the BIP gateway closes the channel; and
(3) the BIP gateway sends a channel closing acknowledgement message to the UICC through the SPI and sends a channel closing notification message to the network browser.

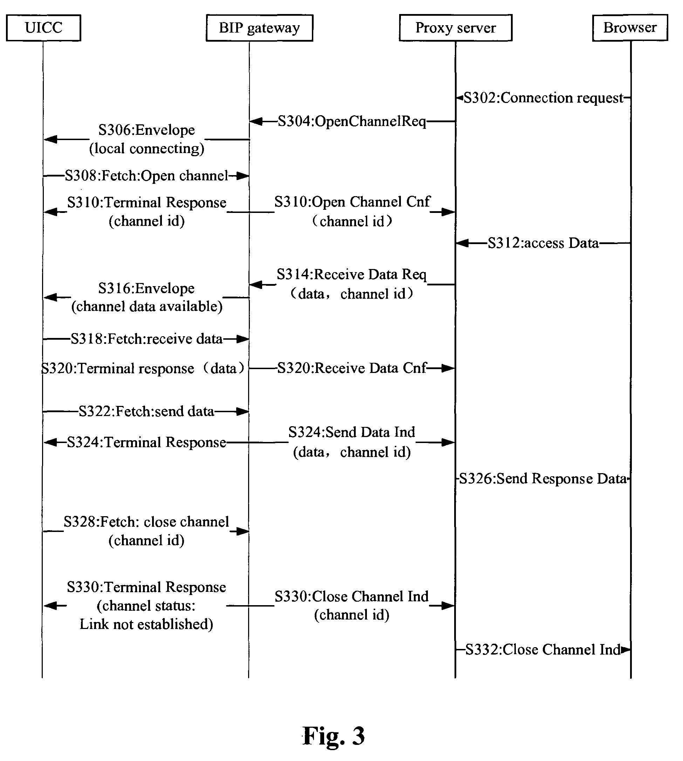

The preferred implementation process is further described below in conjunction with Fig. 3.

Fig. 3 is a flowchart of a method for accessing data according to a preferred embodiment of the present invention. As shown in Fig. 3, the method may include the following steps:
Step 302: The network browser is connecting with the UICC; and the network browser sends a connection request which is transmitted using the TCP/IP through a TCP/IP stack.

It should be noted that a user may complete the steps above in the following ways:
1, inputting http://127.0.0.1:port (wherein the port corresponds to the UICC service port) on the network browser;
2, selecting a bookmark, which is http://127.0.0.1:port and is preset in the browser, to replace the manual input of the address; and
3, accessing the menu in the SCWS by accessing "call browser" in the SIM Tool Kit (STK) of the UICC.

Step 304: A proxy server monitors the UICC service port of the TCP all the time so that it may receive a connection request in time to establish connection with the browser and send a channel opening request (OpenChannelReq) to a BIP module at the same time.

Step 306: The BIP module converts the connection request to a request for establishing connection with the UICC, wherein the request is transmitted using the BIP through the SPI. The BIP module notifies the UICC of the connection event through an envelope (local connecting).

Step 308: After the UICC receives the notification, the channel opening request is sent to the BIP module through the SPI.

Step 310: The BIP module returns a terminal response for successful connection and a channel ID to the UICC, and a channel opening success message (Open Channel Cnf) and the channel ID information to the proxy server.

Step 312: The network browser sends HTTP access data which is transmitted using the TCP/IP to the proxy server.

Step 314: The proxy server sends a data access request (Receive Data Req) to the BIP module, wherein the request carries data and channel ID.

Step 316: The BIP module converts the HTTP data into those transmitted using the BIP and sends them to the UICC through the SPI; and the BIP module sends an envelope (channel data available) to notify the UICC of the transmission of access data.

Step 318: The UICC returns "Fetch: receive data" to request to receive the access data through the SPI.

Step 320: The BIP module sends the access data to the UICC through terminal response (data) and sends "Receive Data Cnf" to the proxy server to indicate that the data is sent successfully.

Step 322: The UICC sends the HTTP response data which is transmitted using the BIP to the BIP module through the SPI, and the UICC sends the response data to the BIP module through "Fetch: send data".

Step 324: After receiving the response data, the BIP module notifies the UICC that the response data has been received by the terminal response and sends the response data to the proxy server through "Send Data Ind (data, channel id)".

Step 326: After receiving the response data, the proxy server converts them into those transmitted using the TCP/IP and returns them to the network browser through a TCP/IP module; and the browser parses an http data packet and then displays it thereon.

Steps 312 to 326 are repeated till all the data on the UICC are sent.

Step 328: The UICC sends "Fetch: close channel (channel id)" to the BIP module through the SPI to request to close the channel.

Step 330: After closing the connection, the BIP module sends a terminal response (channel status: link not established) to the UICC through the SPI to confirm the closing of the channel, and sends a closing notification "Close Channel Ind (channel id)" to the proxy server.

Step 332: The proxy server returns a connection closing message to the network browser through the TCP/IP module.

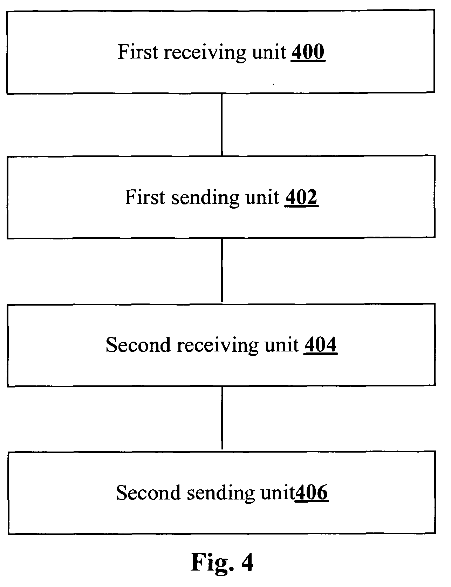

Fig. 4 is a block diagram showing the structure of a device for accessing data according to an embodiment of the present invention. As shown in Fig.4, the device for accessing data includes: a BIP gateway. The BIP gateway may include: a first receiving unit 400, configured to receive a data access instruction from a network browser, a first sending unit 402, configured to send the data access instruction to a UICC through an SPI, a second receiving unit 404, configured to receive data corresponding to the data access instruction from the UICC through the SPI, and a second sending unit 406, configured to send the data corresponding to the data access instruction to the network browser.

Through the device for accessing data shown in Fig. 4, firstly, the BIP gateway receives the data access instruction from the network browser by the first receiving unit 400; secondly, it sends the data access instruction to the UICC by the first sending unit 402 through the SPI; thirdly, it receives the data corresponding to the data access instruction from the UICC by the second receiving unit 404 through the SPI; and finally, it sends the data corresponding to the data access instruction to the network browser by the second sending unit 406. Therefore, the problem that data is transmitted slowly through the channel between the AP and CP and port 7816 in the related arts is solved. Consequently, access speed is improved for the user and large data transmission is implemented for the web server in the UICC.

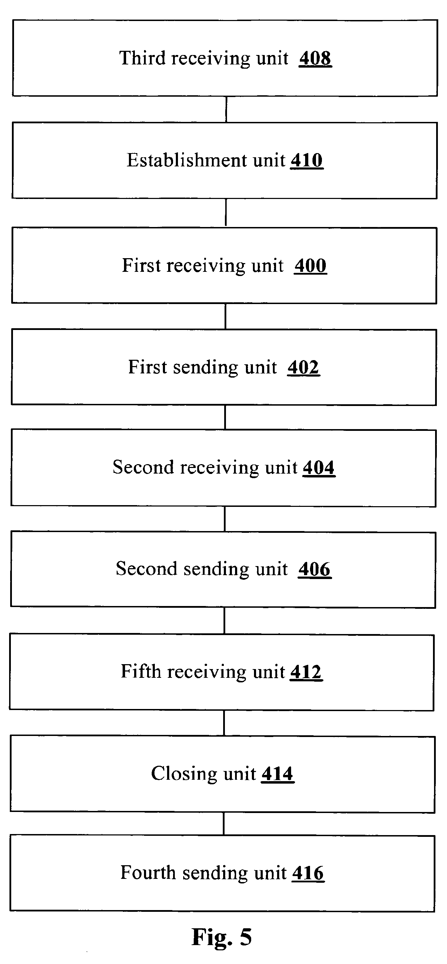

Preferably, as shown in Fig. 5, the BIP gateway may further include: a third receiving unit 408, configured to receive a connection establishment request message from the network browser, and an establishment unit 410, configured to establish a channel between the BIP gateway and the UICC.

In a preferred implementation process, the establishment unit 410 may include: a conversion unit (not shown in Fig. 5), configured to perform protocol conversion on the connection establishment request message and then send the connection establishment request message subjected to protocol conversion to the UICC through the SPI, a fourth receiving unit (not shown in Fig.5), configured to receive a channel establishment request from the UICC through the SPI, and a third sending unit, configured to send a channel establishment success message to the UICC through the SPI.

Preferably, as shown in Fig. 5, the BIP gateway may further include: a fifth receiving unit 412, configured to receive a channel closing request message from the UICC through the SPI, a closing unit 414, configured to close the channel, and a fourth sending unit 416, configured to send a channel closing acknowledgement message to the UICC through the SPI and send a channel closing notification message to the network browser.

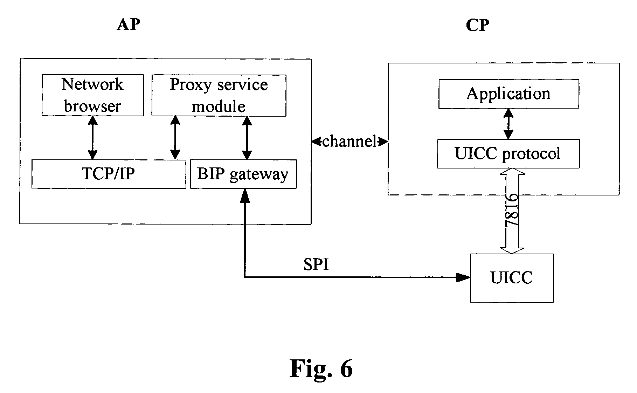

The system for accessing data is further described below in conjunction with Fig. 6.

Fig. 6 is a block diagram showing the structure of a system for accessing data according to an embodiment of the present invention. As shown in Fig. 6, the system for accessing data may include: an AP, one or more CPs, a UICC and a channel between the processors. The AP may include: a network browser, a TCP/IP stack, a proxy server and a BIP gateway which is connected to the UICC by a channel established through the SPI interface. The CP is connected with the UICC through port 7816.

A user inputs a data access instruction on a network browser; the data access instruction is transmitted using the TCP/IP through the TCP/IP stack; the TCP/IP stack sends the HTTP data access instruction to the proxy server; the proxy server sends the received data access instruction to the BIP gateway; the BIP gateway converts the HTTP data access instruction into one transmitted using the BIP and sends it to the UICC through the SPI; the UICC sends HTTP response data which is transmitted according to the BIP to the BIP gateway through the SPI; the BIP gateway receives the response data and then sends them to the proxy server; after receiving the response data, the proxy server converts them into those transmitted using the TCP/IP and returns them to the network browser through the TCP/IP stack; and the network browser parses the HTTP data packet and then displays it thereon.

It should be noted that, in the system for accessing data, the existing channel between the AP and CP is not changed, and it is unnecessary to change the internal structure of the communication processor, thereby, a user may access the data on the UICC still in the conventional way.

As is seen from the description, the present invention has the following technical effects: the data access system, which is simple in implementation architecture and faster for the user to access, is suitable for the large data transmission of web server on the UICC.

Obviously, those skilled in the art shall understand that the modules or steps of the present invention may be implemented by general computing apparatus and centralized in a single computing apparatus or distributed in a network consisting of multiple computing apparatus. Optionally, the modules or steps may be implemented by program codes executable by the computing apparatus, so that they may be stored in a storage apparatus and executed by the computing apparatus, and, in some cases, the steps may be executed in a sequence different from the illustrated or described sequence, or they are respectively made into the integrated circuit modules or many of them are made into a single integrated circuit module. By doing so, the present invention is not limited to any specific combination of hardware and software.

What said above are only the preferred embodiments of the present invention and not intended to limit the present invention. For those skilled in the art, various modifications and changes may be made in the present invention.

## Claims

1. A method for accessing data, which is applied to an Application Processor, AP" wherein the AP comprises a Bearer Independent Protocol, BIP, gateway; **characterized in that** the method comprises:
sending, by the BIP gateway, a data access instruction to a Universal Integrated Circuit Card, UICC, through a Serial Peripheral Interface, SPI (S202); and
receiving, by the BIP gateway, data which is corresponding to the data access instruction and is from the UICC through the SPI (S204).

2. The method according to claim 1, **characterized in that** before sending, by the BIP gateway, the data access instruction to the UICC through the SPI, the method further comprises:
receiving, by the BIP gateway, a connection establishment request message from a network browser; and
establishing, by the BIP gateway, a channel between the BIP gateway and the UICC.

3. The method according to claim 2, **characterized in that** establishing, by the BIP gateway, the channel between the BIP and the UICC comprises:
performing, by the BIP gateway, protocol conversion on the connection establishment request message, and then sending, by the BIP gateway, the connection establishment request message subjected to the protocol conversion to the UICC;
receiving, by the BIP gateway, a channel establishment request message from the UICC; and
sending, by the BIP gateway, a channel establishment success message to the UICC.

4. The method according to claim 1, **characterized in that** sending, by the BIP gateway, the data access instruction to the UICC through the SPI comprises:
receiving, by the BIP gateway, the data access instruction from a network browser;
sending, by the BIP gateway, a notification message to the UICC through the SPI;
receiving, by the BIP gateway, a response message requesting to receive the data access instruction, wherein the response message is from the UICC through the SPI; and
performing, by the BIP gateway, protocol conversion on the data access instruction, and then sending, by the BIP gateway, the data access instruction subjected to the protocol conversion to the UICC through the SPI.

5. The method according to claim 1, **characterized in that** receiving, by the BIP gateway, the data which is corresponding to the data access instruction and is from the UICC through the SPI comprises:
receiving, by the BIP gateway, the data which is corresponding to the data access instruction and is from the UICC through the SPI; and
sending, by the BIP gateway, a notification message that the data corresponding to the data access instruction has been received to the UICC through the SPI, and
sending, by the BIP gateway, the data corresponding to the data access instruction to the network browser.

6. The method according to any one of claims 2 to 5, **characterized in that** after receiving, by the BIP gateway, the data which is corresponding to the data access instruction and is from the UICC through the SPI, the method further comprises:
receiving, by the BIP gateway, a channel closing request message from the UICC through the SPI;
closing, by the BIP gateway, the channel; and
sending, by the BIP gateway, a channel closing acknowledgement message to the UICC through the SPI and a channel closing notification message to the network browser.

7. A device for access data, comprising a Bearer Independent Protocol, BIP, gateway, **characterized in that**
the BIP gateway comprises:
a first receiving unit (400), configured to receive a data access instruction from a network browser;
a first sending unit (402), configured to send a data access instruction to a Universal Integrated Circuit Card, UICC, through a Serial Peripheral Interface, SPI;
a second receiving unit (404), configured to receive data which is corresponding to the data access instruction and is from the UICC through the SPI; and
a second sending unit (406), configured to send the data corresponding to the data access instruction to the network browser.

8. The device according to claim 7, **characterized in that** the BIP gateway further comprises:
a third receiving unit (408), configured to receive a connection establishment request message from a network browser; and
an establishment unit (410), configured to establish a channel between the BIP gateway and the UICC.

9. The device according to claim 8, **characterized in that** the establishment unit comprises:
a conversion unit, configured to perform protocol conversion on the connection establishment request message and then send the connection establishment request message subjected to the protocol conversion to the UICC through the SPI;
a fourth receiving unit, configured to receive a channel establishment request message from the UICC through the SPI, and
a third sending unit, configured to send a channel establishment success message to the UICC through the SPI.

10. The device according to any one of claims 7 to 9, **characterized in that** the BIP gateway further comprises:
a fifth receiving unit (412), configured to receive a channel closing request message from the UICC through the SPI;
a closing unit (414), configured to close the channel; and
a fourth sending unit (416), configured to send a channel closing acknowledgment message to the UICC through the SPI and a channel closing notification message to the network browser.

## Patentansprüche

1. Verfahren für Datenzugriff, das auf einen Anwendungsprozessor, AP, angewandt wird, wobei der AP einen Bearer Independent Protocol, BIP, Netzübergang umfasst, **dadurch gekennzeichnet, dass** das Verfahren aufweist:
Senden einer Datenzugangsanweisung durch den BIP Netzübergang an eine Universal Integrated Circuit Card, UICC, über ein Serial Peripheral Interface, SPI (S202); und
Empfangen von Daten entsprechend der Datenzugangsanweisung und kommend über das SPI (S204) von der UICC durch den BIP Netzübergang.

2. Verfahren nach Anspruch 1, **dadurch gekennzeichnet, dass** vor dem Senden der Datenzugangsanweisung durch den BIP Netzübergang an die UICC über das SPI, das Verfahren zusätzlich umfasst:
Empfangen einer Verbindungsaufbau-Anforderungsnachricht von einem Netzwerk Browser durch den BIP Netzübergang; und
Aufbauen eines Kanals zwischen dem BIP Netzübergang und der UICC durch den BIP Netzübergang.

3. Verfahren nach Anspruch 2, **dadurch gekennzeichnet, dass** das Aufbauen des Kanals zwischen dem BIP Netzübergang und der UICC durch den BIP Netzübergang umfasst:
Durchführen einer Protokollkonvertierung der Verbindungsaufbau-Anforderungsnachricht durch den BIP Netzübergang, und anschließendes Senden der der Protokollkonvertierung unterzogenen Verbindungsaufbau-Anforderungsnachricht an die UICC durch den BIP Netzübergang;
Empfangen einer Kanalaufbau-Anforderungsnachricht von der UICC durch den BIP Netzübergang; und
Senden einer Kanalaufbau-Erfolgsmeldung an die UICC durch den BIP Netzübergang.

4. Verfahren nach Anspruch 1, **dadurch gekennzeichnet, dass** das Senden der Datenzugangsanweisung durch den BIP Netzübergang an die UICC über das SPI umfasst:
Empfangen der Datenzugangsanweisung durch den BIP Netzübergang von einem Netzwerk Browser;
Senden einer Benachrichtigungsmitteilung an die UICC über das SPI durch den BIP Netzübergang;
Empfangen einer den Empfang der Datenzugangsanweisung anfordernden Antwortmeldung durch den BIP Netzübergang, wobei die Antwortmeldung über das SPI von der UICC kommt; und
Durchführen einer Protokollkonvertierung der Datenzugangsanweisung durch den BIP Netzübergang und anschließendes Senden der der Protokollkonvertierung unterzogenen Datenzugangsanweisung an die UICC über das SPI durch den BIP Netzübergang.

5. Verfahren nach Anspruch 1, **dadurch gekennzeichnet, dass** das Empfangen der Daten entsprechend der Datenzugangsanweisung und kommend über das SPI von der UICC durch den BIP Netzübergang umfasst:
Empfangen der Daten entsprechend der Datenzugangsanweisung und über das SPI von der UICC kommend durch den BIP Netzübergang; und
Senden einer Benachrichtigungsmitteilung an die UICC über das SPI durch den BIP Netzübergang, dass die Daten entsprechend der Datenzugangsanweisung empfangen wurden,
und Senden der Daten entsprechend der Datenzugangsanweisung an den Netzwerk Browser durch den BIP Netzübergang.

6. Verfahren nach einem der Ansprüche 2 bis 5, **dadurch gekennzeichnet, dass** das Verfahren nach dem Empfangen der Daten entsprechend der Datenzugangsanweisung und über das SPI von der UICC kommend durch den BIP Netzübergang zusätzlich umfasst:
Empfangen einer Kanal-Schließ-Anforderungsnachricht von der UICC über das SPI durch den BIP Netzübergang;
Schließen des Kanals durch den BIP Netzübergang; und
Senden einer Kanal-Schließ-Bestätigungsnachricht an die UICC über das SPI und einer Kanal-Schließ-Mitteilung an den Netzwerk Browser durch den BIP Netzübergang.

7. Vorrichtung für Datenzugriff, aufweisend einen Bearer Independent Protocol, BIP, Netzübergang, **dadurch gekennzeichnet, dass** der BIP Netzübergang aufweist:
eine erste Empfangseinheit (400), die dazu ausgebildet ist eine Datenzugangsanweisung von einem Netzwerk Browser zu empfangen;
eine erste Sendeeinheit (402), die dazu ausgebildet ist, eine Datenzugangsanweisung an eine Universal Integrated Circuit Card, UICC, über ein Serial Peripheral Interface, SPI zu senden;
eine zweite Empfangseinheit (404), die dazu ausgebildet ist, Daten entsprechend der Datenzugangsanweisung und kommend über das SPI von der UICC zu empfangen; und
eine zweite Sendeeinheit (406), die dazu ausgebildet ist, die Daten entsprechend der Datenzugangsanweisung an den Netzwerk Browser zu senden.

8. Vorrichtung nach Anspruch 7, **dadurch gekennzeichnet, dass** der BIP Netzübergang ferner aufweist:
eine dritte Empfangseinheit (408), die dazu ausgebildet ist, eine VerbindungsaufbauAnforderungsnachricht von einem Netzwerk Browser zu empfangen; und
eine Aufbaueinheit (410), die dazu ausgebildet ist, einen Kanal zwischen dem BIP Netzübergang und der UICC aufzubauen.

9. Vorrichtung nach Anspruch 8, **dadurch gekennzeichnet, dass** die Aufbaueinheit aufweist:
eine Konvertierungseinheit, die dazu ausgebildet ist, eine Protokollkonvertierung der Verbindungsaufbau-Anforderungsnachricht durchzuführen und anschließend die der Protokollkonvertierung unterzogene Verbindungsaufbau-Anforderungsnachricht an die UICC über das SPI zu senden;
eine vierte Empfangseinheit, die dazu ausgebildet ist, eine Kanalaufbau-Anforderungsnachricht von der UICC durch das SPI zu empfangen, und
eine dritte Sendeeinheit, die dazu ausgebildet ist, eine Kanalaufbau-Erfolgsmeldung an die UICC durch das SPI zu senden.

10. Vorrichtung nach einem der Ansprüche 7 bis 9, **dadurch gekennzeichnet, dass** der BIP Netzübergang zusätzlich aufweist:
eine fünfte Empfangseinheit (412), die dazu ausgebildet ist, eine Kanal-Schließ-Anforderungsnachricht von der UICC durch das SPI zu empfangen;
eine Schließeinheit (414), die dazu ausgebildet ist, den Kanal zu schließen; und
eine vierte Sendeeinheit (416), die dazu ausgebildet ist, eine Kanal-Schließ-Bestätigungsnachricht an die UICC über das SPI und eine Kanal-Schließ-Mitteilung an den Netzwerk Browser zu senden.

## Revendications

1. Procédé d'accès à des données, qui est appliqué à un processeur d'application (AP), dans lequel le processeur d'application comprend une passerelle à protocole indépendant du support (BIP) ; **caractérisé en ce que** le procédé comprend :
l'envoi, par la passerelle BIP, d'une instruction d'accès à des données à une carte de circuit intégré universel (UICC), par le biais d'une interface périphérique série (SPI) (S202) ; et
la réception, par la passerelle BIP, de données qui correspondent à l'instruction d'accès aux données et qui proviennent de la carte UICC, par le biais de l'interface périphérique série (S204).

2. Procédé selon la revendication 1, **caractérisé en ce que**, avant l'envoi, par la passerelle BIP, de l'instruction d'accès aux données à la carte UICC par le biais de l'interface périphérique série, le procédé comprend en outre :
la réception, par la passerelle BIP, d'un message de demande d'établissement de connexion de la part d'un navigateur réseau ; et
l'établissement, par la passerelle BIP, d'un canal entre la passerelle BIP et la carte UICC.

3. Procédé selon la revendication 2, **caractérisé en ce que** l'établissement, par la passerelle BIP, du canal entre la passerelle BIP et la carte UICC comprend :
l'exécution, par la passerelle BIP, d'une conversion de protocole sur le message de demande d'établissement de connexion, puis l'envoi, par la passerelle BIP, du message de demande d'établissement de connexion soumis à la conversion de protocole à la carte UICC ;
la réception, par la passerelle BIP, d'un message de demande d'établissement de canal de la part de la carte UICC ; et
l'envoi, par la passerelle BIP, d'un message de réussite d'établissement de canal à la carte UICC.

4. Procédé selon la revendication 1, **caractérisé en ce que** l'envoi, par la passerelle BIP, de l'instruction d'accès aux données à la carte UICC par le biais de l'interface périphérique série comprend :
la réception, par la passerelle BIP, de l'instruction d'accès aux données qui provient d'un navigateur réseau ;
l'envoi, par la passerelle BIP, d'un message de notification à la carte UICC par le biais de l'interface périphérique série ;
la réception, par la passerelle BIP, d'un message de réponse qui demande de recevoir l'instruction d'accès aux données, le message de réponse provenant de la carte UICC, par le biais de l'interface périphérique série ; et
l'exécution, par la passerelle BIP, d'une conversion de protocole sur l'instruction d'accès aux données, puis l'envoi, par la passerelle BIP, de l'instruction d'accès aux données soumise à la conversion de protocole à la carte UICC, par le biais de l'interface périphérique série.

5. Procédé selon la revendication 1, **caractérisé en ce que** la réception, par la passerelle BIP, des données qui correspondent à l'instruction d'accès aux données et qui proviennent de la carte UICC par le biais de l'interface périphérique série comprend :
la réception, par la passerelle BIP, des données qui correspondent à l'instruction d'accès aux données et qui proviennent de la carte UICC, par le biais de l'interface périphérique série ; et
l'envoi, par la passerelle BIP, d'un message de notification selon lequel les données qui correspondent à l'instruction d'accès aux données ont été reçues à 1 carte UICC par le biais de l'interface périphérique série, et l'envoi, par la passerelle BIP, des données qui correspondent à l'instruction d'accès aux données au navigateur réseau.

6. Procédé selon l'une quelconque des revendications 2 à 5, **caractérisé en ce que**, après la réception, par la passerelle BIP, des données qui correspondent à l'instruction d'accès aux données et qui proviennent de la carte UICC par le biais de l'interface périphérique série, le procédé comprend en outre :
la réception, par la passerelle BIP, d'un message de demande de fermeture de canal de la part de la carte UICC, par le biais de l'interface périphérique série ;
la fermeture, par la passerelle BIP, du canal ; et
l'envoi, par la passerelle BIP, d'un message d'accusé de réception de fermeture de canal à la carte UICC par le biais de l'interface périphérique série, et d'un message de notification de fermeture de canal au navigateur réseau.

7. Dispositif d'accès à des données, qui comprend une passerelle BIP BIP (BIP), **caractérisé en ce que**
la passerelle BIP comprend :
une première unité de réception (400), configurée pour recevoir une instruction d'accès à des données de la part d'un navigateur réseau ;
une première unité d'envoi (402), configurée pour envoyer une instruction d'accès à des données à une carte UICC (UICC), par le biais d'une interface périphérique série (SPI) ;
une seconde unité de réception (404), configurée pour recevoir des données qui correspondent à l'instruction d'accès aux données et qui proviennent de la carte UICC, par le biais de l'interface périphérique série ; et
une seconde unité d'envoi (406), configurée pour envoyer les données qui correspondent à l'instruction d'accès aux données au navigateur réseau.

8. Dispositif selon la revendication 7, **caractérisé en ce que** la passerelle BIP comprend en outre :
une troisième unité de réception (408), configurée pour recevoir un message de demande d'établissement de connexion de la part d'un navigateur réseau ; et
une unité d'établissement (410), configurée pour établir un canal entre la passerelle BIP et la carte UICC.

9. Dispositif selon la revendication 8, **caractérisé en ce que** l'unité d'établissement comprend :
une unité de conversion, configurée pour effectuer une conversion de protocole sur le message de demande d'établissement de connexion, puis pour envoyer le message de demande d'établissement de connexion soumis à la conversion de protocole à la carte UICC, par le biais de l'interface périphérique série ;
une quatrième unité de réception, configurée pour recevoir un message de demande d'établissement de canal de la part de la carte UICC, par le biais de l'interface périphérique série, et
une troisième unité d'envoi, configurée pour envoyer un message de réussite d'établissement de canal à la carte UICC, par le biais de l'interface périphérique série.

10. Dispositif selon l'une quelconque des revendications 7 à 9, **caractérisé en ce que** la passerelle BIP comprend en outre :
une cinquième unité de réception (412), configurée pour recevoir un message de demande de fermeture de canal de la part de la carte UICC, par le biais de l'interface périphérique série ;
une unité de fermeture (414), configurée pour fermer le canal ; et
une quatrième unité d'envoi (416), configurée pour envoyer un message d'accusé de réception de fermeture de canal à la carte UICC par le biais de l'interface périphérique série, et un message de notification de fermeture de canal au navigateur réseau.
